# EUROPÄISCHE PATENTSCHRIFT

(11) **EP 2 761 137 B1**
(45) Veröffentlichungstag und Bekanntmachung des Hinweises auf die Patenterteilung: **17.06.2020**
(21) Anmeldenummer: 12773281.6
(22) Anmeldetag: 28.09.2012
(51) Int. Cl.: F01D 5/14

(54) **SCHAUFEL EINER ROTOR- ODER STATORREIHE FÜR DEN EINSATZ IN EINER STRÖMUNGSMASCHINE**
BLADE OF A ROW OF ROTOR BLADES OR STATOR BLADES FOR USE IN A TURBOMACHINE
PALE D'UNE RANGÉE DE PALES DE ROTOR OU DE STATOR POUR UNE TURBOMACHINE

(30) Priorität: 29.09.2011 DE 102011083778
(43) Veröffentlichungstag der Anmeldung: 06.08.2014
(73) Patentinhaber: Rolls-Royce Deutschland Ltd & Co KG, 15827 Blankenfelde-Mahlow (DE)
(72) Erfinder: PROF. DR. GÜMMER, Volker, 85411 Hohenkammer (DE)
(74) Vertreter: Maikowski & Ninnemann Patentanwälte Partnerschaft mbB
(86) Internationale Anmeldenummer: PCT/EP2012/069214
(87) Internationale Veröffentlichungsnummer: WO 2013/045629

(56) Entgegenhaltungen:
- EP-A1- 1 371 813
- US-A1- 2004 241 003
- US-A1- 2008 219 852
- US-A1- 2010 008 785

## Beschreibung

Die Erfindung betrifft eine Strömungsmaschine mit Schaufeln einer Rotor- oder Statorreihe gemäß dem Oberbegriff des Anspruchs 1.

Eine Rotorschaufel für den Einsatz in einer Strömungsmaschine eines Flugzeugtriebwerks ist in der US 2008/219852 A1 beschrieben.

Die US 2004/0241003 A1 offenbart eine Rotorschaufel mit einer Aussparung an einer Oberfläche an einem freien Ende der Schaufel. Die EP1371813 A1 offenbart eine Schaufel, die eine Oberflächenstruktur mit mehreren Rillen aufweist.

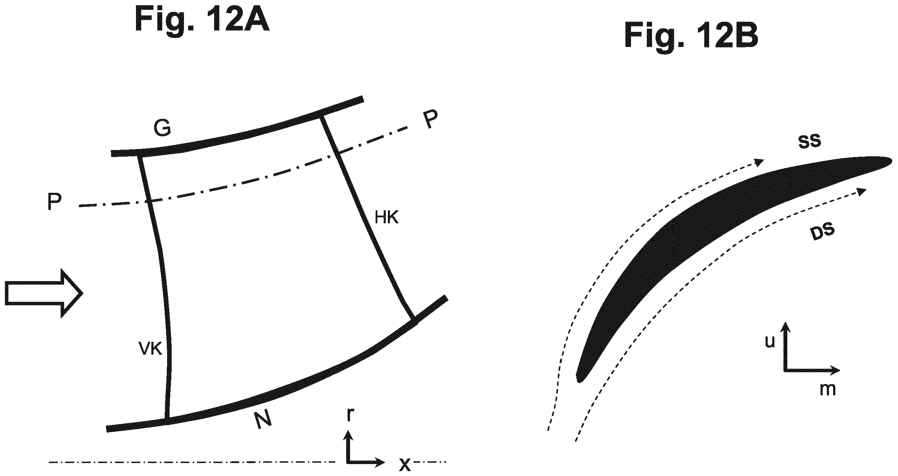

Die Strömung in Schaufelreihen aerodynamisch hoch belasteter Strömungsmaschinen ist gekennzeichnet durch eine sehr hohe zu erreichende Strömungsumlenkung. Die erforderliche Strömungsumlenkung kann entweder in Teilen der Schaufelhöhe oder entlang der gesamten Schaufelhöhe so hoch werden, dass ein konventionelle, nach dem Stand der Technik ausgeführte Gestalt der Schaufelprofilschnitte zu frühzeitiger Ablösung der Grenzschichtströmung auf dem Schaufelprofil und im Seitenwandbereich an Nabe und Gehäuse führt. Übliche Schaufeln, wie sie in den Figuren 12A, 12B dargestellt sind, ohne zusätzliche Gestaltungsmerkmale zur Stabilisierung der Profil- und Wandgrenzschichten, sind aufgrund extrem hoher Druckverluste und der Nichterreichung der angestrebten Strömungsumlenkung ungeeignet. Zudem werden die im Bereich der begrenzenden Seitenwände (an Nabe und Gehäuse) auftretenden Sekundärströmungen unbeherrschbar und führen zu weiteren sehr hohen Totaldruckverlusten. Die Konsequenz ist ein insgesamt schlechtes Leistungsverhalten der Strömungsmaschine.

Schaufeln mit einer Gestaltung nach dem Stand der Technik, siehe Figuren 12A, 12B, besitzen aufgrund der starken auftretenden aerodynamischen Belastung der Grenzschichten, d.h. der zweidimensionalen Grenzschichten auf dem Profil und der dreidimensionalen Grenzschichten an Nabe- und Gehäusewand, einen zu geringen Arbeitsbereich und zu hohe Verluste, um die in modernen Strömungsmaschinen erforderlichen Betriebskennwerte zu erbringen.

Es besteht somit ein Bedarf an Schaufeln, die eine Stabilisierung der Profil- und Wandgrenzschichten bei einer hohen Strömungsumlenkung erreichen und dadurch einen breiteren Arbeitsbereich und geringe Verluste bereitstellen.

Erfindungsgemäß ist eine Strömungsmaschine gemäß Anspruch 1 vorgesehen.

Mit anderen Worten stellt die erfindungsgemäße Lösung eine mit einer Kantenbildung verbundene lokale Dickenvariation einer Schaufel bereit. Die Kanten können dabei stetig gekrümmt bzw. abgerundet ausgebildet sein. Dass die Dickenvariation mit einer Kantenbildung verbunden ist, bedeutet dabei, dass die Kontur der Schaufel in einem bestimmten Bereich der Druck- oder Saugseite im Wesentlichen sprunghaft zum Inneren der Schaufel hin zurückfällt. Im Bereich der Kanten (Absatzkante und Konturecke) ist die Krümmung der Schaufel somit lokal erhöht.

Es ist dabei vorgesehen, dass der Konturrücksprung jeder der Schaufeln in der Nähe eines festen Schaufelendes vorgesehen ist und eine Rampe bildet, die, mit der Hauptströmungsrichtung gehend, von einem Schaufelkonturpunkt innerhalb des Hauptströmungspfades auf die innere oder äußere Hauptströmungspfadberandung hinführt.

Durch die Bereitstellung eines Konturrücksprungs erfährt die Strömung über die Länge der Schaufel eine zusätzliche Drehbewegung, so dass eine verbesserte Strömungsumlenkung erreicht werden kann. Dies kann dazu genutzt werden, eine Strömungsmaschine mit einer verringerten Schaufelzahl oder eine Strömungsmaschine mit einer höheren Strömungsumlenkung bereitzustellen.

Die vorliegende Erfindung bezieht sich dabei auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Die Rotorschaufeln und Statorschaufeln sind in einem Hauptströmungspfad angeordnet, der von Hauptströmungspfadberandungen, üblicherweise einer Gehäusekontur außen und einer Nabenkontur innen, berandet wird. Der Rotor besteht aus einer Anzahl von Schaufeln, die mit der rotierenden Welle der Maschine verbunden sind. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind üblicherweise von einem die äußere Hauptströmungspfadberandung bildenden Gehäuse umgeben, in anderen erfindungsgemäßen Fällen, z. B. bei Propellern oder Schiffsschrauben, existiert kein Gehäuse und die äußere Hauptströmungspfadberandung wird durch die äußerste, die Schaufelspitze des Rotors tangierende Meridianstromlinie gebildet.

Nach einer Ausgestaltung der Erfindung ist der Verlauf der Meridianstromlinien der Strömungsmaschine in der durch die Axialkoordinate (x) und die Radialkoordinate (r) gebildeten Meridianebene durch Punkte gegeben, die durch jeweils gleiche prozentuale Unterteilung mehrerer zwischen der Nabenkontur und der Gehäusekontur konstruierten und senkrecht auf der mittig im Hauptströmungspfad liegenden mittleren Meridianstomlinie SLM stehenden und zu einer Schar gehörenden Geraden G(i) resultieren.

In einer Ausgestaltung ist vorgesehen, dass die Schaufel in der durch die Axialkoordinate und die Radialkoordinate gebildeten Meridianebene von der Schar von Meridianstromlinien überströmt wird, wobei
- die Richtung einer Meridianstromlinie von Ort zu Ort veränderlich die Meridiankoordinate vorgibt,
- der Konturrücksprung dadurch gekennzeichnet ist, dass die Kontur der Schaufel in mindestens einer durch die meridian-orthogonale Koordinate und die Umfangskoordinate gebildeten Schnittebene durch die Schaufel in einem örtlich eng begrenzten Bereich einen Absatz aufweist, und
- die meridian-orthogonale Koordinate ebenfalls von Ort zu Ort veränderlich ist und als stets senkrecht auf der mittleren Meridianstromlinie stehend definiert ist.

Nach einer Ausgestaltung ist wenigstens ein Konturrücksprung auf der Saugseite der Schaufel vorgesehen.

In einer Ausgestaltung ist vorgesehen, dass die Absatzkante des Konturrücksprunges entlang wenigstens eines Teiles ihres Verlaufes mit einer Meridianstromlinie übereinstimmt.

Nach einer Ausgestaltung ist der Konturrücksprung in einem Randbereich, welcher definiert ist durch die radial inneren oder radial äußeren 30% der Hauptströmungspfadweite, beispielsweise am inneren Ende (Fuß) einer Rotorschaufel, am äußeren Ende einer mit Außendeckband versehenen Rotorschaufel, am inneren Ende einer mit Innendeckband versehenen Statorschaufel oder am äußeren Ende (Fuß) einer Statorschaufel vorgesehen.

Nach einer Ausgestaltung ist die Absatzkante des Konturrücksprunges in der Meridianansicht im Wesentlichen geradlinig oder monoton gekrümmt.

In einer Ausgestaltung ist vorgesehen, dass die Absatzkante des Konturrücksprunges in der Meridianansicht mindestens einen Krümmungswechsel besitzt.

In einer Ausgestaltung ist vorgesehen, dass der Konturrücksprung an einer Schaufel vorgesehen ist, die Teil oder Gegenstand einer doppelreihigen oder geschlitzten Stator- oder Rotoranordnung ist.

Nach einer Ausgestaltung ist der Konturrücksprung an einer Schaufel vorgesehen, die Teil oder Gegenstand einer doppelreihigen oder geschlitzte Stator- oder Rotoranordnung ist.

In einer Ausgestaltung ist vorgesehen, dass sich der Konturrücksprung über wenigstens einen Teil der Profiltiefe erstreckt, wobei die Absatzkante des Konturrücksprungs in wenigstens einem Punkt Ihres Verlaufs einen Neigungswinkel kleiner als 45° zu einer die Absatzkante schneidenden Meridianstromlinie aufweist.

Weitere Ausgestaltungen der Erfindung sind in den Unteransprüchen angegeben.

Im Folgenden wird die Erfindung anhand von Ausführungsbeispielen in Verbindung mit den Figuren beschrieben. Dabei zeigen:
Fig.1 die Definition von Meridianstromlinien und Meridianstromlinien-profilschnitten an einer erfindungsgemäßen Schaufel,
Fig. 2A-2D vier Schaufeln jeweils in der Meridianansicht,
Fig. 3A-3C ein weiteres Ausführungsbeispiel einer erfindungsgemäßen Schaufel in Meridianansicht, im Profilschnitt entlang der Linie X-X der Figur 3A und in perspektivischer Ansicht,
Fig. 4A-4C ein weiteres Ausführungsbeispiel einer erfindungsgemäßen Schaufel in Meridianansicht, im Profilschnitt entlang der Linie X-X der Figur 4B und in perspektivischer Ansicht,
Fig. 5A-5C ein weiteres Ausführungsbeispiel einer erfindungsgemäßen Schaufel in Meridianansicht, im Profilschnitt entlang der Linie X-X der Figur 5A und in perspektivischer Ansicht,
Fig. 6A-6C ein weiteres Ausführungsbeispiel einer erfindungsgemäßen Schaufel in Meridianansicht, im Profilschnitt entlang der Linie X-X der Figur 6A und in perspektivischer Ansicht,
Fig. 7A-7C ein weiteres Ausführungsbeispiel einer Schaufel in Meridianansicht, im Profilschnitt entlang der Linie X-X der Figur 7A und in perspektivischer Ansicht,
Fig. 8A-8C ein weiteres Ausführungsbeispiel einer Schaufel in Meridianansicht, im Profilschnitt entlang der Linie X-X der Figur 8A und in perspektivischer Ansicht,
Fig. 9A-9C ein weiteres Ausführungsbeispiel einer Schaufel in Meridianansicht, im Profilschnitt entlang der Linie X-X der Figur 9A und in perspektivischer Ansicht,
Fig. 10A eine Darstellung eines Kantenneigungswinkels zwischen einer Meridianstromlinie und einer Absatzkante,
Fig. 10B einen Meridianstromlinienprofilschnitt eines Ausführungsbeispiels einer Schaufel,
Fig. 11A ein weiteres Ausführungsbeispiel einer erfindungsgemäßen Schaufel in Meridianansicht ;
Fig. 11B die Schaufel der Fig. 11A im Schnitt entlang der Linie Y-Y,
Fig. 11C einen Ausschnitt des Schnittes Y-Y der Fig. 11B unter Darstellung einer Mehrzahl von Varianten eines Konturrücksprungs,
Fig. 12A eine schematische Darstellung einer Schaufel nach dem Stand der Technik im Meridianschnitt; und
Fig. 12B die Schaufel der Fig. 12A im Profilschnitt entlang der Linie P-P.

Eine konventionelle Schaufel nach dem Stand der Technik, wie sie in Fig. 12A und Fig. 12B gezeigt ist, besitzt keine Absatzkante auf einer ihrer Schaufelseiten. Die Fig. 12B zeigt einen Profilschnitt der in der Fig. 12A im Meridianschnitt dargestellten Schaufel. Im Meridianschnitt erfolgt die Anströmung, angedeutet durch den dicken Pfeil, von links nach rechts. Bei konventionellen Schaufeln verläuft die Strömung um die einzelnen Profilschnitte der Schaufeln (siehe Stromlinienprofilschnitt P-P) entlang vollständig glatter Konturen ohne einen Absatz.

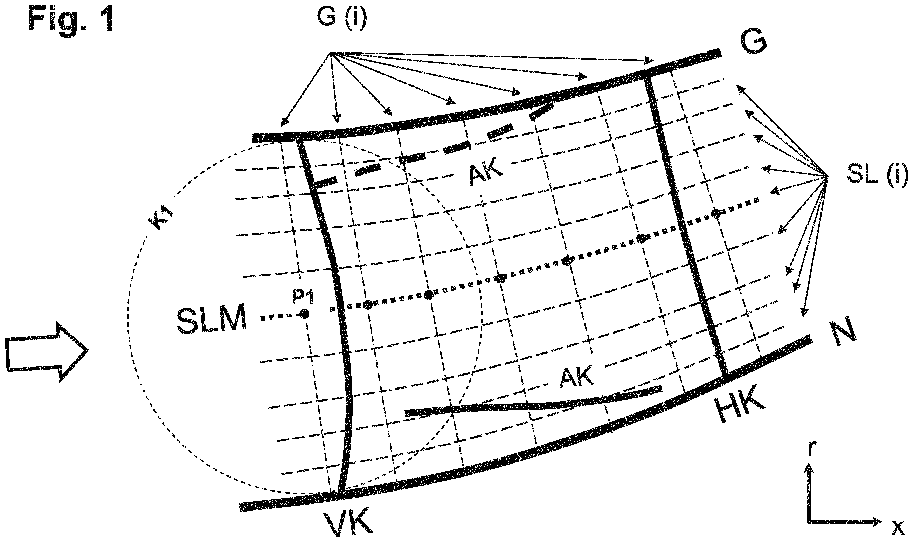

Die Fig. 1 zeigt den Hauptströmungspfad mit Durchströmung von links nach rechts (angezeigt durch den Pfeil links), in der durch die Axialkoordinate x und die Radialkoordinate r gebildeten Meridianebene, wobei der Hauptströmungspfad durch die radial inneren Hauptströmungspfadberandung N und die radial äußere Hauptströmungspfadberandung G begrenzt wird.

Mittig zwischen der radial inneren Hauptströmungspfadberandung N und der radial äußeren Hauptströmungspfadberandung G ist die mittlere Meridianstromlinie SLM gegeben. Ihr Verlauf entspricht der Verbindung der Mittelpunkte dem Hauptströmungspfad einbeschriebener Kreise, wie im Bild für den ersten markierten Punkt P1 auf der mittleren Meridianstromlinie SLM und den zugehörigen Kreis K1 beispielhaft verdeutlicht wird.

Eine Schar von Geraden G(i) ist innerhalb des Hauptströmungspfades gegeben, deren Mitglieder jeweils senkrecht auf der mittleren Meridianstromlinie SLM stehen und an den Hauptströmungspfadberandungen G und N enden. Weitere Meridianstromlinien SL(i) sind durch die Verbindung von Punkten bei jeweils gleicher prozentualer Unterteilung der Geraden G(i) zwischen den Hauptströmungspfadberandungen N und G definiert. Bezüglich der Schar der Meridianstromlinien SL(i) kann der Verlauf des Konturrücksprunges beziehungsweise seiner Absatzkante AK beurteilt und spezifiziert werden.

Ebenfalls im Bild eingezeichnet sind die Vorder- und Hinterkante VK und HK der Schaufel sowie die Absatzkante eines erfindungsgemäßen Konturrücksprunges. Der Abstand zwischen der Schaufelvorderkante VK und der Schaufelhinterkante HK entlang einer Meridianstromlinie, insbesondere entlang der mittleren Meridianstromlinie SLM, stellt die Profiltiefe der Schaufel dar.

Es wird hier beispielhaft die Saugseite der Schaufel betrachtet, auf der der Konturrücksprung und die zugehörige mit durchgezogener Linie eingezeichnete Absatzkante AK vorgesehen sind. Erfindungsgemäß kann ein Konturrücksprung und die zugehörige Absatzkante aber auch auf der Druckseite der Schaufel vorgesehen sein, wie durch die gestrichelt eingezeichnete Absatzkante AK verdeutlicht wird.

Es ist in einer Ausgestaltung vorgesehen, dass die Absatzkante AK des Konturrücksprunges entlang wenigstens eines Teiles ihres Verlaufes entlang einer der die Druck- und Saugseite umfassenden Schaufelseiten mit einer Meridianstromlinie übereinstimmt.

Es ist in einer Ausgestaltung insbesondere vorgesehen, dass die Absatzkante AK des Konturrücksprunges in wenigstens einem Punkt ihres Verlaufes entlang einer der die Druck- und Saugseite umfassenden Schaufelseiten schräg zu einer Meridianstromlinie verläuft, oder sogar über ihren gesamten Verlauf schräg zu den sie schneidenden Meridianstromlinien SL(i) verläuft. In letzterem Fall kann vorgesehen sein, dass die Absatzkante AK des Konturrücksprungs in jedem ihrer Punkte von einer Meridianstromlinie (SL(i) unter einem Neigungswinkel geschnitten wird, wobei der Neigungswinkel jeweils beispielsweise kleiner als 45° oder kleiner als 30° ist.

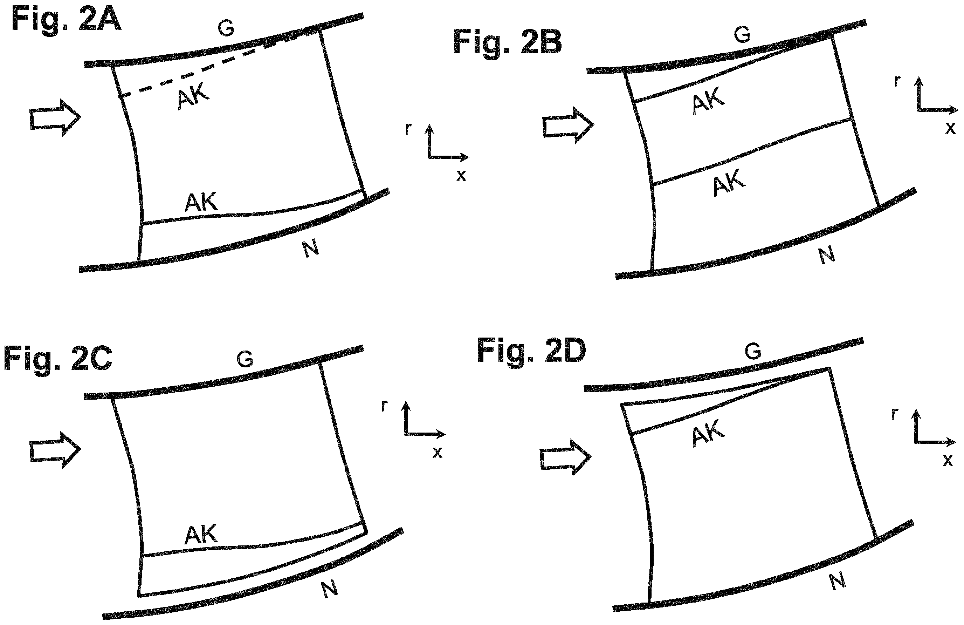

Die Fig. 2A-2D zeigt beispielhaft vier Schaufeln in der durch die Axialkoordinate x und die Radialkoordinate r gebildeten Meridianebene. Alle Teilabbildungen zeigen die Ansicht der üblicherweise im Wesentlichen konvex ausgebildeten Schaufelsaugseite, die Druckseite ist vom Betrachter abgewandt. Der Pfeil links zeigt jeweils die Hauptströmungsrichtung an. Jede der vier Schaufeln weist auf der Saugseite einen Konturrücksprung auf, kenntlich gemacht durch die zugehörige Absatzkante AK, die sich entlang der Profiltiefe der Schaufel erstreckt und in den hier gezeigten Fällen von der Schaufelvorderkante VK bis zur Schaufelhinterkante HK reicht. Erfindungsgemäß sind aber ebenfalls Konturrücksprünge bzw. Absatzkanten, die sich nur über einen Teil, beispielsweise mindestens 30% der Profiltiefe der Schaufel erstrecken.

Die Strömung um die Schaufel wird von der inneren Hauptströmungspfadberandung N, beispielsweise eine Nabe, und von der äußeren Hauptströmungspfadberandung G, beispielsweise ein Gehäuse, begrenzt.

Die Fig. 2A zeigt eine erfindungsgemäße Schaufel mit zwei festen Schaufelenden. Die Schaufel kann eine Rotorschaufel sein, bei der eine Plattform mit Fuß die innere Hauptströmungspfadberandung N (Nabe) und ein Deckband die äußere Hauptströmungspfadberandung G bildet. Dies kann aber auch eine Statorschaufel sein, bei der ein Deckband die innere Hauptströmungspfadberandung N und eine Plattform mit Fuß die äußeren Hauptströmungspfadberandung G bildet.

Im Bereich des inneren Schaufelendes verläuft ein Konturrücksprung mit einer Absatzkante AK entlang der Saugseite von einem Startpunkt, der in der Vorderkantenebene in einiger Entfernung von der inneren Hauptströmungspfadberandung N liegt, zu einem Endpunkt, der in bestimmtem Abstand zur inneren Hauptströmungspfadberandung N in der Hinterkantenebene liegt.

Dabei ist die Vorderkantenebene durch Rotation der in der Meridianebene x-r vorgesehenen Vorderkantenlinie in Umfangsrichtung u um die Mittelachse der Strömungsmaschine und die Hinterkantenebene durch Rotation der in der Meridianebene x-r vorgesehenen Hinterkantenlinie in Umfangsrichtung u um die Mittelachse der Strömungsmaschine gegeben.

In alternativen Ausgestaltungen können Absatzkanten vorgesehen sein, deren Start- oder Endpunkt direkt an der Hauptströmungspfadberandung liegt.

Im Bereich des äußeren Schaufelendes verläuft ein Konturrücksprung mit einer Absatzkante AK entlang der Druckseite (gestrichelt dargestellt, da die Druckseite vom Betrachter abgewandt ist) von einem Startpunkt, der in der Vorderkantenebene in einiger Entfernung von der äußeren Hauptströmungspfadberandung G liegt, zu einem Endpunkt, der an der äußeren Hauptströmungspfadberandung G in der Hinterkantenebene liegt.

Die Fig. 2B zeigt ebenfalls eine erfindungsgemäße Schaufel mit zwei festen Schaufelenden. Im Bereich des äußeren Schaufelendes verläuft ein Konturrücksprung mit einer Absatzkante AK entlang der Saugseite von einem Startpunkt, der in der Vorderkantenebene in einiger Entfernung von der äußeren Hauptströmungspfadberandung G liegt, zu einem Endpunkt, der an der äußeren Hauptströmungspfadberandung G in der Hinterkantenebene liegt. Ein zweiter Konturrücksprung mit einer Absatzkante AK verläuft in ähnlicher Weise im mittleren Bereich der Schaufelsaugseite. Zusätzlich oder alternativ können mehrere Konturrücksprünge mit einer Absatzkante auf der Druckseite der Schaufel ausgebildet sein.

Die Fig. 2C zeigt eine Schaufel mit einem festen Schaufelende an der äußeren Hauptströmungspfadberandung G (Gehäuse) und einem freien inneren Schaufelende. Diese kann eine Rotorschaufel sein, bei der eine Plattform mit Fuß die äußere und drehende Hauptströmungspfadberandung G (Gehäuse) bildet und ein Laufspalt an der inneren stehenden Hauptströmungspfadberandung N (Nabe) vorgesehen ist. Diese kann aber auch eine Statorschaufel sein, bei der eine Plattform mit Fuß die äußere und stehende Hauptströmungspfadberandung G (Gehäuse) bildet und ein Spalt an der inneren drehenden Hauptströmungspfadberandung N (Nabe) vorgesehen ist.

Im Bereich des inneren freien Schaufelendes verläuft ein Konturrücksprung mit einer Absatzkante AK entlang der Saugseite von einem Startpunkt, der in der Vorderkantenebene in einiger Entfernung vom inneren Schaufelende liegt, zu einem Endpunkt, der in bestimmtem Abstand zum inneren Schaufelende in der Hinterkantenebene liegt. Ebenfalls können Konturrücksprünge bzw. Absatzkanten, deren Start- oder Endpunkt direkt am inneren Schaufelende liegt, vorgesehen sein.

Die Fig. 2D zeigt eine Schaufel mit einem festen Schaufelende an der inneren Hauptströmungspfadberandung N (Nabe) und einem freien äußeren Schaufelende. Diese kann eine Rotorschaufel sein, bei der eine Plattform mit Fuß die innere und drehende Hauptströmungspfadberandung N (Nabe) bildet und ein Laufspalt an der äußeren stehenden Hauptströmungspfadberandung G (Gehäuse) vorgesehen ist. Diese kann aber auch eine Statorschaufel sein, bei der eine Plattform mit Fuß die innere und stehende Hauptströmungspfadberandung G (Gehäuse) bildet und ein Spalt an der äußeren Hauptströmungspfadberandung G (Gehäuse) vorgesehen ist.

Im Bereich des äußeren freien Schaufelendes verläuft ein Konturrücksprung mit einer Absatzkante AK entlang der Saugseite von einem Startpunkt, der in der Vorderkantenebene in einiger Entfernung vom äußeren Schaufelende liegt, zu einem Endpunkt, der in einem bestimmten Abstand vom äußeren Schaufelende in der Hinterkantenebene liegt. Ebenfalls erfindungsgemäß sind Konturrücksprünge mit einer Absatzkante, deren Start- oder Endpunkt direkt am äußeren Schaufelende liegt.

Die Fig. 2D umfasst im Falle einer Rotorschaufel einen Laufspalt und ein die Schaufelreihe umgebendes Gehäuse. In alternativen Ausgestaltungen kann aber auch eine nicht ummantelte Konfiguration ohne Gehäuse vorgesehen sein.

Die Absatzkante AK eines Konturrücksprunges verläuft in einem Ausführungsbeispiel in einem bestimmten Maß in wenigstens einem ihrer Punkte schräg zur Meridianströmung um die Schaufel. Hierdurch erhält die Strömung eine zusätzliche Drehbewegung.

Es kann vorgesehen sein, dass die Absatzkante AK in der Meridianansicht geradlinig oder in eine Richtung kontinuierlich gekrümmt geformt ist. Auch kann vorgesehen sein, dass die Absatzkante AK in der Meridianansicht eine S-Form zeigt oder mehr als einen Krümmungswechsel besitzt.

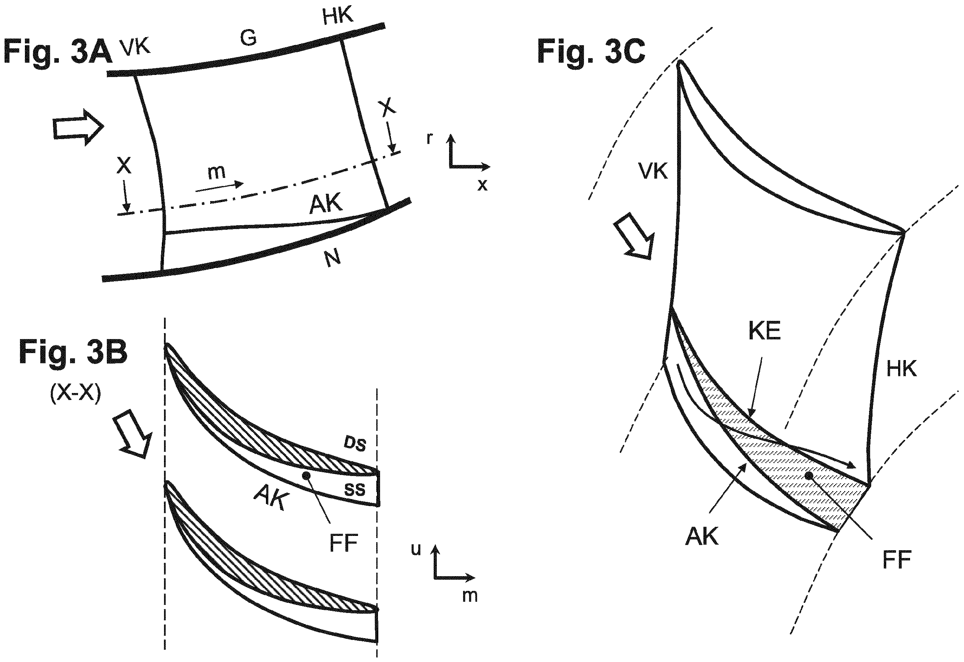

Die Fig. 3A-3C zeigen ein weiteres Ausführungsbeispiel einer erfindungsgemäßen Schaufel mit Konturrücksprung in drei unterschiedlichen Ansichten.

Die Fig. 3A stellt die Schaufel in der durch die Axialkoordinate x und die Radialkoordinate r gebildeten Meridianebene dar. Der Pfeil links zeigt die Hauptströmungsrichtung an. Die Schaufel ist zwischen der inneren und äußeren Hauptströmungspfadberandung N, G angeordnet und besitzt eine Vorderkante VK, auf die die Strömung zuströmt und eine Hinterkante HK, von der die Strömung abströmt.

Die Absatzkante AK des Konturrücksprunges erstreckt sich in diesem Ausführungsbeispiel über die gesamte Profiltiefe der Schaufel und verläuft entsprechend von einem Startpunkt an der Vorderkante zu einem Endpunkt an der Hinterkante. Die Absatzkante AK ist im Bereich der inneren Hauptströmungspfadberandung N vorgesehen, und zwar derart, dass sie sich mit der Hauptströmungsrichtung der inneren Hauptströmungspfadberandung annähert.

Es kann vorgesehen sein, dass die Absatzkante AK, wie hier dargestellt, direkt an der Hauptströmungspfadberandung N endet.

Durch einen kleinen Pfeil und den zugeordneten Buchstaben m ist die Meridianströmungsrichtung gekennzeichnet. Entlang einer Meridianstomlinie ist der Schnitt X-X durch die Schaufel mit Blick auf die innere Hauptströmungspfadberandung und die Absatzkante AK und die Flankenfläche FF des Konturabsatzes eingezeichnet.

Die Fig. 3B zeigt die erfindungsgemäße Schaufel im Schnitt X-X, das heißt in der durch die Umfangskoordinate u und die Meridiankoordinate m gebildeten Ebene. Der Pfeil links zeigt die Hauptströmungsrichtung an. Zur besseren Verdeutlichung sind zwei benachbarte Schaufeln der gesamten Schaufelreihe dargestellt, wobei die Profilkontur jeweils durch die im Wesentlichen konvexe Saugseite SS und die im Wesentlichen konkave Druckseite DS gebildet wird. Das hier dargestellte Profil zeigt beispielhaft eine für Verdichter oder Gebläse typische Form, jedoch ist eine für Turbinen typische Profilform mit mehr Wölbung, mit anderer relativer Dicke und mit anderen Vorder- und Hinterkantenrichtungswinkeln ebenfalls erfindungsgemäß. In der Ansicht X-X ist sowohl die Absatzkante AK als auch die daran grenzende Flankenfläche FF des Konturrücksprunges erkennbar. In der hier gezeigten erfindungsgemäßen Lösung erhöht sich die Breite der Flankenfläche entlang der Schaufelprofiltiefe kontinuierlich in Strömungsrichtung und endet mit einem Maximalwert in der Hinterkantenebene.

Die Fig. 3C zeigt die Schaufel in einer perspektivischen Ansicht mit Blick von stromabwärts auf die Saugseite der Schaufel und den Konturrücksprung mit Absatzkante AK und Flankenfläche FF. Der Pfeil links zeigt die Hauptströmungsrichtung an, die in der Fig. 3C etwa von links oben nach rechts unten verläuft. Ein langgestreckter Pfeil deutet den etwaigen Verlauf der Meridianströmung auf der Schaufelkontur und in der hier dargestellten erfindungsgemäßen Lösung auf der Saugseite an. Daraus ist ersichtlich, dass der Verlauf des Konturrücksprunges und der Absatzkante AK so beschaffen ist, dass die Flankenfläche FF bezüglich der heraneilenden Meridianströmung im Windschatten liegt, entsprechend einer stromab der Absatzkante AK zurücktretenden Schaufelkontur. Die Flankenfläche FF liegt bezüglich der Meridianströmung wenigstens an einem Ort im Windschatten. Dabei kann vorgesehen sein, dass die Flankenfläche FF bezüglich der Meridianströmung an jedem Ort des Konturrücksprunges im Windschatten liegt.

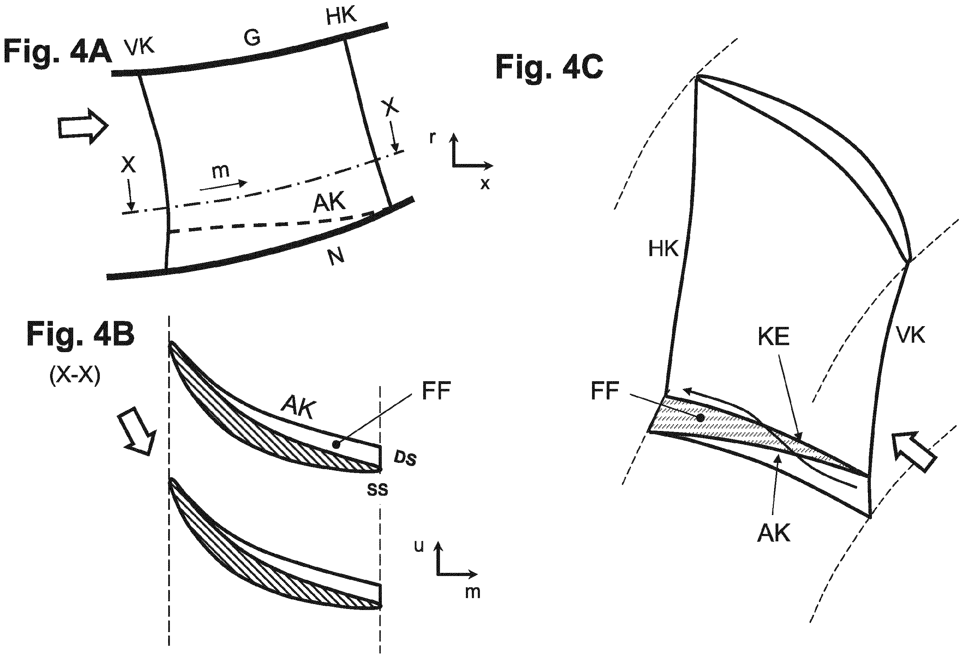

Die Fig. 4A-4C zeigen ein weiteres Ausführungsbeispiel einer erfindungsgemäßen Schaufel mit einer Absatzkante in drei unterschiedlichen Ansichten, ähnlich der Darstellung in Fig. 3A-3C. Hier ist lediglich der Konturrücksprung mit der zugehörigen Absatzkante AK und der Flankenfläche FF auf der Druckseite der Schaufel vorgesehen. Dies ist in der Fig. 4A durch einen gestrichelten Verlauf der Absatzkante AK angedeutet. In der Fig. 4B zeigt der Pfeil rechts die Hauptströmungsrichtung an, die in diesem Bildteil etwa von rechts unten nach links oben verläuft. Ein langgestreckter Pfeil deutet den etwaigen Verlauf der Meridianströmung auf der Schaufelkontur und in der hier dargestellten Lösung auf der Druckseite an.

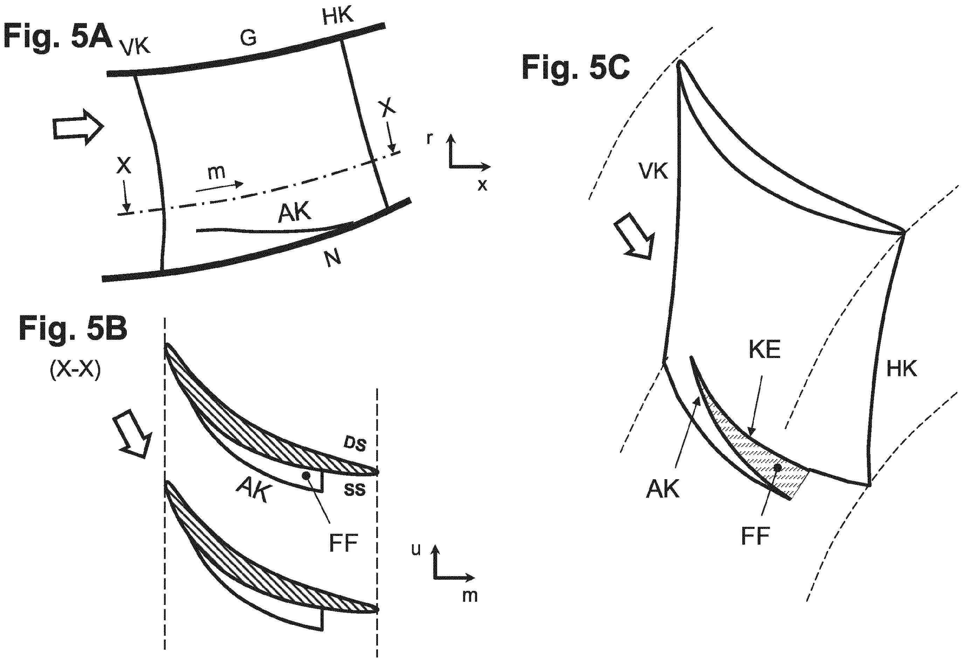

Die Fig. 5A-5C zeigen ein weiteres Ausführungsbeispiel einer erfindungsgemäßen Schaufel mit einem Konturrücksprung in drei unterschiedlichen Ansichten, ähnlich der Darstellung in Fig. 3A-3C. Hier ist der Konturrücksprung mit der zugehörigen Absatzkante AK und der Flankenfläche FF auf der Saugseite der Schaufel vorgesehen, beginnt aber nicht an sondern um eine bestimmten Betrag der Profiltiefe stromab der Vorderkante. Die Absatzkante AK des Konturrücksprunges endet hier ebenfalls an der inneren Hauptströmungspfadberandung, aber nicht erst in der Hinterkantenebene, sondern um einen bestimmten Betrag der Profiltiefe stromauf der Hinterkantenebene.

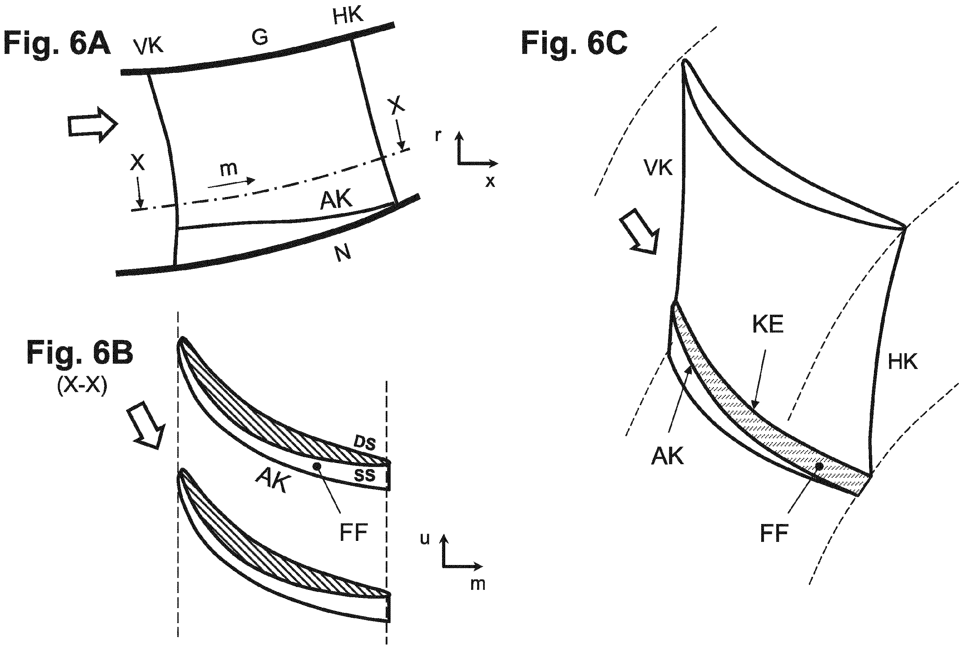

Die Fig. 6A-6C zeigen ein weiteres Ausführungsbeispiel einer Schaufel mit einem Konturrücksprung in drei unterschiedlichen Ansichten, ähnlich der Darstellung in Fig. 3A-3C. Hier ist der Konturrücksprung mit der zugehörigen Absatzkante AK und der Flankenfläche FF auf der Saugseite der Schaufel vorgesehen, hier aber nicht mit einer sich von Null aus erhöhenden Breite der Flankenfläche, sondern mit einer direkt am Startpunkt mit einem endlichen Betrag beginnenden Breite der Flankenfläche FF.

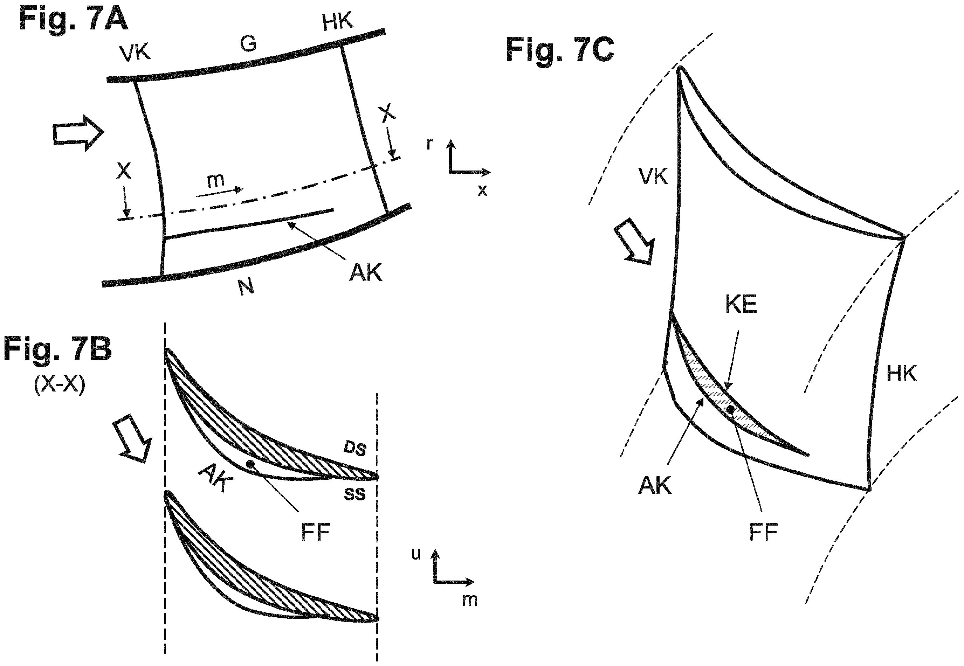

Die Fig. 7A-7C zeigen ein weiteres Ausführungsbeispiel einer Schaufel mit einem Konturrücksprung in drei unterschiedlichen Ansichten, ähnlich der Darstellung in Fig. 3A-3C. Hier ist der Konturrücksprung mit der zugehörigen Absatzkante AK und der Flankenfläche FF auf der Saugseite der Schaufel vorgesehen, hier aber nicht mit einer sich kontinuierlich in Strömungsrichtung erhöhenden Breite der Flankenfläche, sondern mit einer in Strömungsrichtung variierenden Breite der Flankenfläche. So ist im dargestellten Ausführungsbeispiel eine zunächst anwachsende und dann auf Null zurückgehende Breite der Flankenfläche vorgesehen. Der Endpunkt der Absatzkante liegt hier in einem bestimmten Abstand von der inneren Hauptströmungspfadberandung und in einem bestimmten Abstand stromauf der Hinterkante.

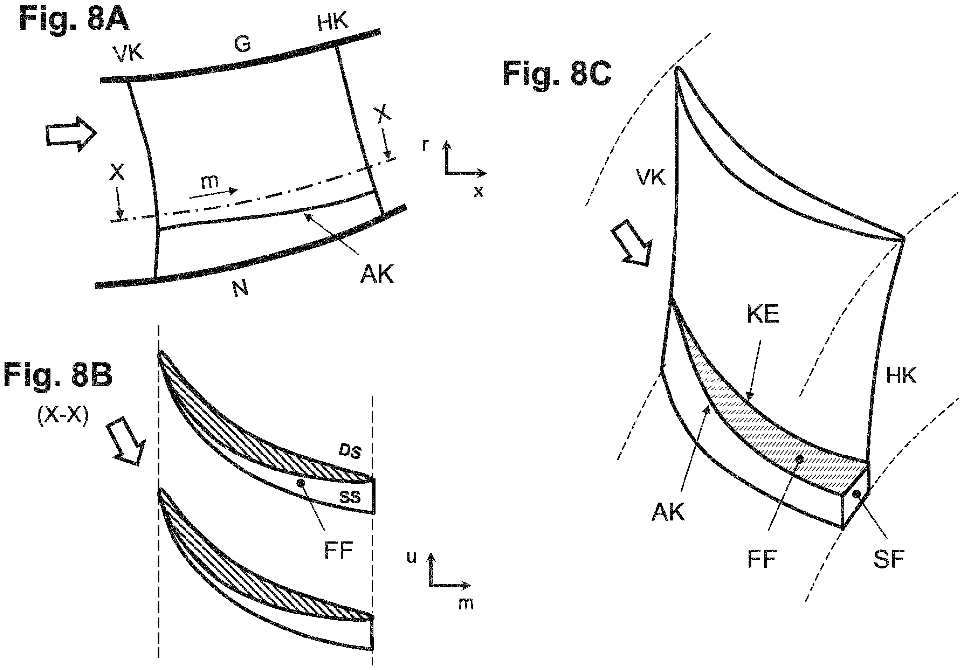

Die Fig. 8A-8C zeigen ein weiteres Ausführungsbeispiel einer Schaufel mit einem Konturrücksprung in drei unterschiedlichen Ansichten, ähnlich der Darstellung in Fig. 3A-3C. Hier ist der Konturrücksprung mit der zugehörigen Absatzkante AK und der Flankenfläche FF auf der Saugseite der Schaufel vorgesehen, endet hier aber nicht direkt an der inneren Hauptströmungspfadberandung N, sondern in einem bestimmten Abstand davon. Auch wird zur Profildefinition im Bereich der Schaufel zwischen der Absatzkante AK und der inneren Hauptströmungspfadberandung N eine Form ähnlich oder gleich der Flankenfläche auf die innere Hauptströmungspfadberandung N projiziert, mit der Konsequenz, dass der Konturrücksprung mit einer im Windschatten der Strömung liegenden und im wesentlichen viereckigen Stirnfläche SF abschließt.

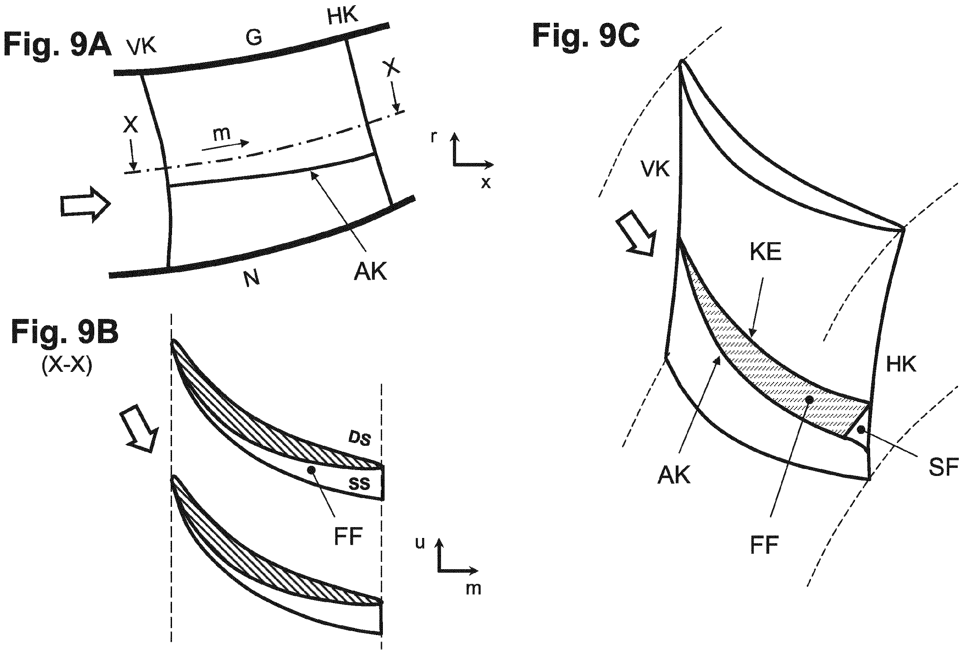

Die Fig. 9A-9C zeigen ein weiteres Ausführungsbeispiel einer Schaufel mit einem Konturrücksprung in drei unterschiedlichen Ansichten, ähnlich der Darstellung in Fig. 8A-8C. Hier ist der Konturrücksprung mit der zugehörigen Absatzkante AK und der Flankenfläche FF auf der Saugseite der Schaufel vorgesehen, die auch hier in einem bestimmten Abstand von der inneren Hauptströmungspfadberandung N enden, jedoch geht die Profildefinition zwischen der inneren Hauptströmungspfadberandung N und dem Konturrücksprung bei Annäherung an die innere Hauptströmungspfadberandung in eine konventionelle Form mit dünner Hinterkante über, wobei eine im Windschatten der Strömung liegende und im wesentlichen dreieckige Stirnfläche SF entsteht.

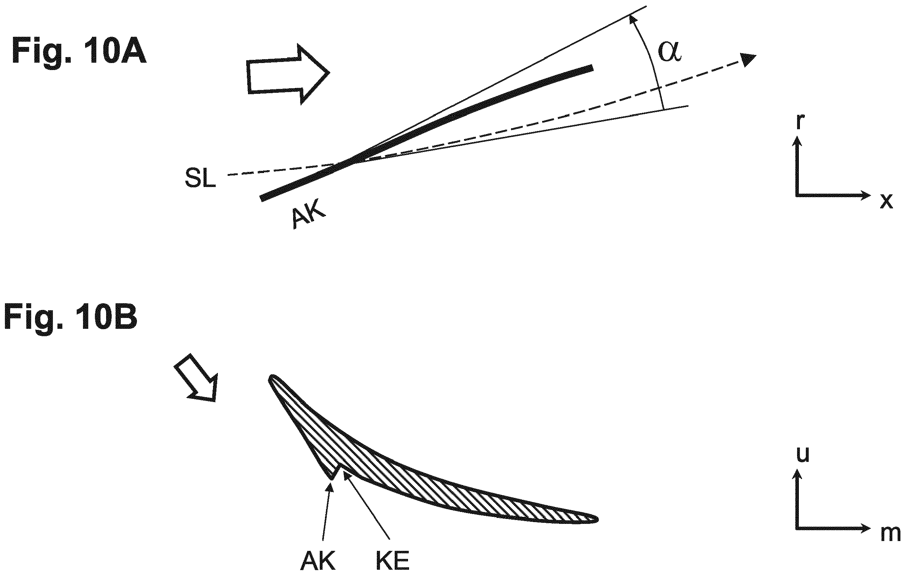

Die Fig. 10A zeigt eine ausgewählte Meridianstromlinie SL und die Absatzkante AK eines erfindungsgemäßen Konturrücksprunges in der durch die Axialkoordinate x und die Radialkoordinate r gebildeten Meridianebene. Die Absatzkante AK wird in einem ihrer Punkte von der Meridianstromlinie SL unter einem Neigungswinkel alpha geschnitten. Der Neigungswinkel alpha wird auf kürzestem Winkelweg von der Meridianstromlinie SL hin zur Tangente an die Absatzkante AK im Schnittpunkt mit der Meridianstromlinie SL gemessen.

In einer Ausgestaltung ist vorgesehen, dass in wenigstens einem Punkt des Verlaufes der Absatzkante AK ein Neigungswinkel alpha mit einem Betrag von kleiner als 30 Grad realisiert ist. Insbesondere kann vorgesehen sein, dass in wenigstens einem Punkt des Verlaufes der Absatzkante AK ein Neigungswinkel alpha mit einem Betrag von kleiner als 15 Grad realisiert ist. Ebenfalls kann vorgesehen sein, dass nicht nur in wenigstens einem Punkt, sondern im gesamten Verlauf der Absatzkante AK ein Neigungswinkel alpha mit einem Betrag von kleiner als 15 Grad vorgesehen ist.

In der Fig. 10B ist in einem Meridianstromlinienprofilschnitt einer Schaufel, folglich in der durch die Meridiankoordinate m und die Umfangskoordinate u gebildeten Ebene, eine besondere Ausgestaltung der Erfindung dargestellt. Der Konturrücksprung mit seiner Absatzkante AK und seiner Konturecke KE bildet hier einen im Meridianstromlinienprofilschnitt in Strömungsrichtung zurückfallenden Konturverlauf, folglich derart, dass entlang einer die Absatzkante AK schneidenden Meridianstromlinie eine in Meridianströmungsrichtung zurücktretende Kontur der Schaufel gegeben ist und auf diese Weise die an die Absatzkante AK grenzende Flankenfläche FF dort im Windschatten der entlang der Schaufeloberfläche eilenden Meridianströmung liegt.

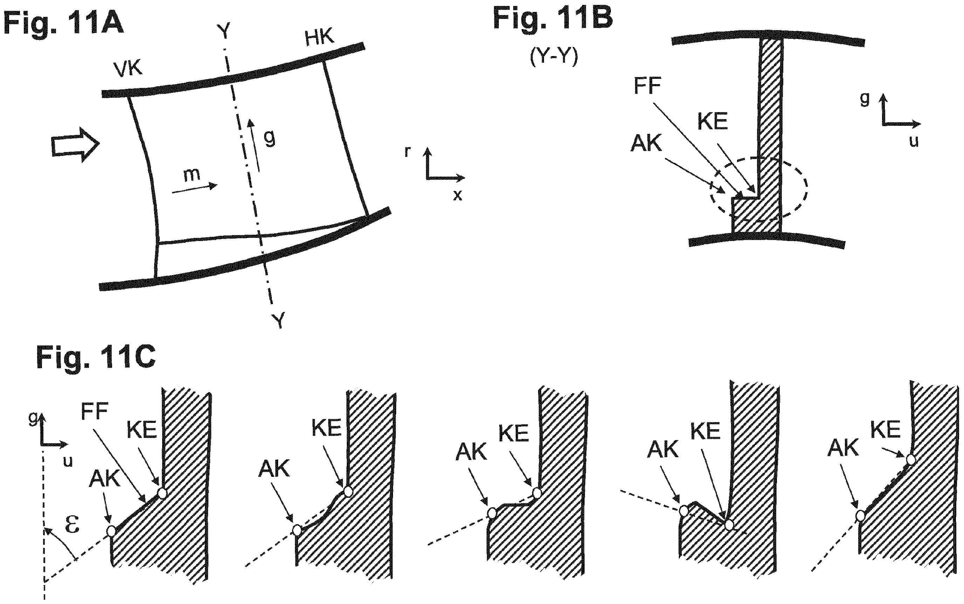

Die Fig. 11A-11C zeigen eine erfindungsgemäße Schaufel mit Konturrücksprung in zwei unterschiedlichen Ansichten.

Die Fig. 11A stellt die Schaufel in der durch die Axialkoordinate x und die Radialkoordinate r gebildeten Meridianebene dar. Mit jeweils einem kurzen dünnen Pfeil sind die Koordinatenrichtungen m (Meridiankoordinate, die entlang einer Meridianstromlinie weist) und g (meridian-orthogonale Koordinate, die entlang einer der Geraden G(i) senkrecht zur mittleren Meridianstromlinie weist) gekennzeichnet. In Richtung der meridian-orthogonalen Koordinate ist der Schnitt Y-Y durch die erfindungsgemäße Schaufel mit Konturrücksprung eingezeichnet.

Die Fig. 11B stellt die Schaufel im Schnitt Y-Y, d. h. in der durch die Umfangskoordinate u und die meridian-orthogonale Koordinate g, dar. In einem solchen Schnitt ist der Konturrücksprung deutlich erkennbar. Er ist hier als einfache Ausführungsvariante rechtwinklig dargestellt, jedoch sind auch nicht-rechtwinklige Konturrücksprünge erfindungsgemäß.

Der Konturrücksprung ist dadurch gekennzeichnet, dass die Kontur der Schaufel in einem bestimmten Bereich der Druck- oder Saugseite im wesentlichen sprunghaft zum Inneren der Schaufel hin zurückfällt, womit in dem bestimmten Bereich die Absatzkante AK gegeben ist. Hierbei ist der Verlauf der Absatzkante AK durch jene Konturpunkte gegeben, die die größte konvexe Krümmung in Nähe des Konturrücksprunges aufweisen. Im Extremfall ist die erfindungsgemäße Absatzkante AK, wie in den vorangegangenen Figuren vereinfachend dargestellt, durch eine winklige Kante gegeben.

Es kann vorgesehen sein, dass durch den Konturrücksprung eine Konturecke gegeben ist, wobei der Verlauf der Konturecke KE durch jene Konturpunkte gegeben, die die größte konkave Krümmung in Nähe des Konturrücksprunges aufweisen. Im Extremfall ist die Konturecke KE, wie in den vorangegangenen Figuren vereinfachend dargestellt, durch eine winklige Kante gegeben.

Die Fig. 11C zeigt einen Ausschnitt der Ansicht des Schnittes Y-Y, der in der Fig. 11B mit einer gestrichelten Ellipse umrandet ist, nämlich die Region des Konturrücksprunges. Es sind fünf erfindungsgemäße Varianten des Konturrücksprunges in einer durch die meridian-othogonale Koordinate g und die Umfangskoordinate u gebildeten Schnittebene gezeigt. Gemäß der obigen Definition sind die Absatzkante AK und die Konturecke KE durch Punkte bei größter konvexer bzw. konkaver Krümmung gegeben. Der Winkel epsilon, der in dieser Ansicht zwischen der meridian-othogonalen Richtung g und einer Geraden durch die Punkte der Absatzkante AK und der Konturecke KE ausgebildet ist, beschreibt die Steilheit des Konturrücksprungs.

Der Steilheitswinkel epsilon wird von der besagten Geraden durch AK und KE auf dem kürzesten Winkelweg zur Richtung g gemessen. In Ausgestaltungen der Erfindung sind Beträge von epsilon an wenigstens einer Stelle des Verlaufes des Konturrücksprunges (d.h. wenn man in der Darstellung der Fig. 11C senkrecht zur Blattebene den Konturrücksprung entlang wandert) von größer 10 Grad realisiert.

In einer Ausgestaltung ist vorgesehen, dass die Konturstrecke des Konturrücksprunges zwischen AK und KE in mindestens einer durch die meridian-orthogonale Koordinate g und die Umfangskoordinate u gebildeten Schnittebene ohne Tangentenunstetigkeiten verläuft, und dementsprechend geradlinig, geschwungen oder gewellt geformt ist.

In einer Ausgestaltung ist vorgesehen, dass der Konturrücksprung in mindestens einer durch die meridian-othogonale Koordinate g und die Umfangskoordinate u gebildeten Schnittebene gänzlich ohne Tangentenunstetigkeiten verläuft, und dementsprechend in der Umgebung der Absatzkante AK und der Konturecke KE abgerundet ausgebildet ist.

Die Erfindung beschränkt sich in ihrer Ausgestaltung nicht auf die vorstehend erläuterten Ausführungsbeispiele, die lediglich beispielhaft zu verstehen sind. Beispielsweise können die Länge, die Lage und der Verlauf des Konturrücksprungs von den dargestellten Ausführungsbeispielen abweichen. Auch kann vorgesehen sein, dass ein oder mehrere Konturrücksprünge sowohl auf der Saugseite als auch auf der Druckseite einer Schaufel ausgebildet sind.

## Patentansprüche

1. Strömungsmaschine mit einem Hauptströmungspfad, der von einer radial inneren Hauptströmungspfadberandung (N) und einer radial äußeren Hauptströmungspfadberandung (G) berandet wird und eine Hauptströmungsrichtung aufweist, wobei in dem Hauptströmungspfad Schaufeln einer Rotor- oder Statorreihe angeordnet sind, wobei
- jede der Schaufeln mit einer im Wesentlichen konvexen Saugseite (SS) und einer im Wesentlichen konkaven Druckseite (DS), sowie mit einer Vorderkante (VK), auf die die Strömung zuströmt und einer Hinterkante (HK), von der die Strömung abströmt, ausgebildet ist,
- mittig zwischen der radial inneren Hauptströmungspfadberandung (N) und der radial äußeren Hauptströmungspfadberandung (G) des Hauptströmungspfades eine mittlere Meridianstromlinie (SLM) einer Meridianströmung gegeben ist, deren Verlauf einer Verbindung der Mittelpunkte von dem Hauptströmungspfad einbeschriebener Kreise entspricht, und innerhalb des Hauptströmungspfades eine Schar von Geraden (G(i)) gegeben ist, deren Mitglieder jeweils senkrecht auf der mittleren Meridianstromlinie (SLM) stehen und an den Hauptströmungspfadberandungen (N, G) enden, wobei weitere Meridianstromlinien (SL(i)) durch die Verbindung von Punkten bei jeweils gleicher prozentualer Unterteilung der Geraden (G(i)) zwischen den Hauptströmungspfadberandungen (N, G) definiert sind, und
- jede der Schaufeln mindestens einen Konturrücksprung aufweist, der auf mindestens einer der die Saugseite (SS) und die Druckseite (DS) umfassenden Seiten der Schaufel vorgesehen ist, wobei der Konturrücksprung sich über wenigstens einen Teil der Profiltiefe jeder der Schaufeln in Richtung der Meridianstromlinien (SL(i)) und der Profilhöhe der Schaufel senkrecht zu den Meridianstromlinien (SL(i)) erstreckt,
wobei der Konturrücksprung jeder der Schaufeln in einem Randbereich, welcher definiert ist durch die radial inneren oder radial äußeren 30% der Hauptströmungspfadweite, in der Nähe eines festen Schaufelendes
vorgesehen ist und eine Rampe bildet, die, mit der Hauptströmungsrichtung gehend, von einem Schaufelkonturpunkt innerhalb des Hauptströmungspfades auf die innere oder äußere Hauptströmungspfadberandung hinführt, **dadurch gekennzeichnet, dass** der Konturrücksprung eine Absatzkante (AK), eine Konturecke (KE) und einen zwischen der Absatzkante (AK) und der Konturecke (KE) vorgesehene Flankenfläche (FF) umfasst, wobei sich die Breite der Flankenfläche (FF) entlang der Schaufelprofiltiefe kontinuierlich mit der Strömungsrichtung erhöht und dementsprechend mit einem Maximalwert endet.

2. Strömungsmaschine nach Anspruch 1, **dadurch gekennzeichnet, dass** der Verlauf der Absatzkante (AK) durch jene Konturpunkte jeder der Schaufeln gegeben ist, die die größte konvexe Krümmung der Schaufelkontur in Nähe des Konturrücksprunges aufweisen, und der Verlauf der Konturecke (KE) durch jene Konturpunkte jeder der Schaufeln gegeben ist, die die größte konkave Krümmung der Schaufelkontur in Nähe des Konturrücksprunges aufweisen.

3. Strömungsmaschine nach Anspruch 1 oder 2, **dadurch gekennzeichnet, dass** die Absatzkante (AK) des Konturrücksprunges in oder hinter der Vorderkantenebene jeder der Schaufeln beginnt, wobei die Vorderkantenebene durch Rotation der in der Meridianebene (x-r) vorgesehenen Vorderkantenlinie (VK) in Umfangsrichtung (u) um die Mittelachse der Strömungsmaschine gegeben ist.

4. Strömungsmaschine nach einem der vorangehenden Ansprüche, **dadurch gekennzeichnet, dass** die Absatzkante (AK) des Konturrücksprunges in oder vor der Hinterkantenebene jeder der Schaufeln endet, wobei die Hinterkantenebene durch Rotation der in der Meridianebene (x-r) vorgesehenen Hinterkantenlinie (HK) in Umfangsrichtung (u) um die Mittelachse der Strömungsmaschine gegeben ist.

5. Strömungsmaschine nach einem der vorangehenden Ansprüche, **dadurch gekennzeichnet, dass** jede der Schaufeln im Hauptströmungspfad angeordnet ist.

6. Strömungsmaschine nach einem der vorangehenden Ansprüche, **dadurch gekennzeichnet, dass** die Absatzkante (AK) des Konturrücksprunges direkt an der Hauptströmungspfadberandung (N, G) beziehungsweise an einem Randprofilschnitt jeder der Schaufeln endet oder die Flankenfläche (FF) des Konturrücksprunges mit endlicher Breite direkt an der Hauptströmungspfadberandung (N, G) beziehungsweise an einem Randprofilschnitt der Schaufel endet.

7. Strömungsmaschine nach einem der vorangehenden Ansprüche, **dadurch gekennzeichnet, dass** der Konturrücksprung mit Absatzkante (AK), Flankenfläche (FF) und Konturecke (KE) im Wesentlichen entlang der gesamten Profiltiefe jeder der Schaufeln vorgesehen ist.

8. Strömungsmaschine nach einem der vorangehenden Ansprüche, **dadurch gekennzeichnet, dass** die Absatzkante (AK) des Konturrücksprunges in der durch die Axialkoordinate (x) und die Radialkoordinate (r) gebildeten Meridianebene von einer Meridianstromlinie (SL(i)) unter einem Neigungswinkel (alpha) in einem Schnittpunkt geschnitten wird, wobei der Neigungswinkel (alpha) stets von der Tangente an die Meridianstromlinie auf kürzestem Winkelweg hin zur Tangente an die Absatzkante (AK) gemessen wird, und wobei der Neigungswinkel (alpha) in mindestens einem Punkt des Verlaufes der Absatzkante (AK) mit einem Betrag von kleiner als 30 Grad vorgesehen ist.

9. Strömungsmaschine nach einem der vorangehenden Ansprüche, **dadurch gekennzeichnet, dass** jede der Schaufeln in der durch die Axialkoordinate x und die Radialkoordinate r gebildeten Meridianebene von einer Schar von Meridianstromlinien (SL(i)) überströmt wird, wobei
- die Richtung einer Meridianstromlinie (SL(i)) von Ort zu Ort veränderlich die Meridiankoordinate (m) vorgibt,
- der Konturrücksprung **dadurch gekennzeichnet ist, dass** die Kontur der Schaufel in mindestens einer durch die meridian-orthogonale Koordinate (g) und die Umfangskoordinate (u) gebildeten Schnittebene durch die Schaufel in einem örtlich eng begrenzten Bereich einen Absatz aufweist,
- die meridian-orthogonale Koordinate (g) ebenfalls von Ort zu Ort veränderlich ist und als stets senkrecht auf der mittleren Meridianstromlinie (SML) stehend definiert ist, und
- bei Betrachtung des Konturrücksprunges in der durch die meridian-orthogonale Koordinate (g) und die Umfangskoordinate (u) gebildeten Schnittebene eine Hilfsgerade durch zum einen den Punkt der Absatzkante, der sich durch lokal maximale konvexe Konturkrümmung auszeichnet, und zum anderen durch den Punkt der Konturecke, der sich durch lokal maximale konkave Konturkrümmung auszeichnet, mit einem Steilheitwinkel (epsilon) gegen die meridian-orthogonale Richtung (g) geneigt ist, wobei der Steilheitswinkel (epsilon) von der Hilfsgeraden auf dem kürzesten Winkelweg zur Richtung (g) gemessen wird, und wobei der Steilheitswinkel (epsilon) an wenigstens einer Stelle des Verlaufes des Konturrücksprunges mehr als 10 Grad beträgt.

10. Strömungsmaschine nach einem der vorangehenden Ansprüche, **dadurch gekennzeichnet, dass** der Konturrücksprung sich über wenigstens 30 % der Profiltiefe erstreckt und sich dabei von einem an oder stromab der Vorderkantenebene vorgesehenen Startpunkt zu einem stromab des Startpunktes gelegenen und stromauf oder in der Hinterkantenebene vorgesehenen Endpunkt erstreckt.

11. Strömungsmaschine nach einem der vorangehenden Ansprüche, **dadurch gekennzeichnet, dass** der Konturrücksprung sich über wenigstens einen Teil der Profiltiefe erstreckt, wobei die Absatzkante (AK) des Konturrücksprungs über ihren gesamten Verlauf schräg zu den Meridianstromlinien (SL(i)) verläuft und/oder entlang wenigstens eines Teiles ihres Verlaufes mit einer Meridianstromlinie (SL(i)) übereinstimmt.

12. Strömungsmaschine nach einem der vorangehenden Ansprüche, **dadurch gekennzeichnet, dass** der Konturrücksprung sich über wenigstens einen Teil der Profiltiefe erstreckt, wobei die Absatzkante (AK) des Konturrücksprungs in jedem ihrer Punkte von einer Meridianstromlinie (SL(i)) unter einem Neigungswinkel von jeweils kleiner als 30° geschnitten wird und/oder entlang wenigstens eines Teiles ihres Verlaufes mit einer Meridianstromlinie (SL(i)) übereinstimmt.

13. Strömungsmaschine nach einem der vorangehenden Ansprüche, **dadurch gekennzeichnet, dass** der Konturrücksprung am inneren Ende einer Rotorschaufel, am äußeren Ende einer mit Außendeckband versehenen Rotorschaufel, am inneren Ende einer mit Innendeckband versehenen Statorschaufel oder am äußeren Ende einer Statorschaufel vorgesehen ist.

## Claims

1. Turbomachine having a main flow path which is bordered by a radially inner main flow path boundary (N) and a radially outer main flow path boundary (G) and which has a main flow direction, wherein blades of a rotor row or stator row are arranged in the main flow path, wherein
- each of the blades is formed with a substantially convex suction side (SS) and a substantially concave pressure side (DS), and also with a leading edge (VK), onto which the flow flows in, and a trailing edge (HK), from which the flow flows out,
- centrally between the radially inner main flow path boundary (N) and the radially outer main flow path boundary (G) of the main flow path, there is a mean meridian streamline (SLM) of a meridian flow, the course of which corresponds to a connection of the central points of circles inscribed by the main flow path, and, within the main flow path, there is a set of straight lines (G(i)), the members of which are in each case perpendicular to the mean meridian streamline (SLM) and end at the main flow path boundaries (N, G), wherein further meridian streamlines (SL(i)) are defined by the connection of points with respectively equal percentage division of the straight lines (G(i)) between the main flow path boundaries (N, G), and
- each of the blades has at least one set-back contour portion which is provided on at least one of the sides, comprising the suction side (SS) and the pressure side (DS), of the blade, wherein the set-back contour portion extends over at least a part of the profile depth of each of the blades in the direction of the meridian streamlines (SL(i)) and of the profile height of the blade perpendicular to the meridian streamlines (SL(i)), wherein the set-back contour portion of each of the blades is provided in an edge region, which is defined by the radially inner or radially outer 30% of the main flow path width, in the vicinity of a fixed blade end and forms a ramp which, extending in the main flow direction, leads from a blade contour point within the main flow path toward the inner or outer main flow path boundary, **characterized in that** the set-back contour portion comprises a shoulder edge (AK), a contour corner (KE) and a flank surface (FF) provided between the shoulder edge (AK) and the contour corner (KE), wherein the width of the flank surface (FF) increases continuously along the blade profile depth with the flow direction and accordingly ends with a maximum value.

2. Turbomachine according to Claim 1, **characterized in that** the course of the shoulder edge (AK) is defined by those contour points of each of the blades which have the greatest convex curvature of the blade contour in the vicinity of the set-back contour portion, and the course of the contour corner (KE) is defined by those contour points of each of the blades which have the greatest concave curvature of the blade contour in the vicinity of the set-back contour portion.

3. Turbomachine according to Claim 1 or 2, **characterized in that** the shoulder edge (AK) of the set-back contour portion begins in or behind the leading edge plane of each of the blades, wherein the leading edge plane is defined by rotation of the leading edge line (VK) provided in the meridian plane (x-r) in a circumferential direction (u) about the central axis of the turbomachine.

4. Turbomachine according to any of the preceding claims, **characterized in that** the shoulder edge (AK) of the set-back contour portion ends in or in front of the trailing edge plane of each of the blades, wherein the trailing edge plane is defined by rotation of the trailing edge line (HK) provided in the meridian plane (x-r) in the circumferential direction (u) about the central axis of the turbomachine.

5. Turbomachine according to any of the preceding claims, **characterized in that** each of the blades is arranged in the main flow path.

6. Turbomachine according to any of the preceding claims, **characterized in that** the shoulder edge (AK) of the set-back contour portion ends directly at the main flow path boundary (N, G) or at an edge profile intersection of each of the blades, or the flank surface (FF) of the set-back contour portion ends with a finite width directly at the main flow path boundary (N, G) or at an edge profile intersection of the blade.

7. Turbomachine according to any of the preceding claims, **characterized in that** the set-back contour portion with shoulder edge (AK), flank surface (FF) and contour corner (KE) is provided substantially along the entire profile depth of each of the blades.

8. Turbomachine according to any of the preceding claims, **characterized in that** the shoulder edge (AK) of the set-back contour portion is intersected, in the meridian plane formed by the axial coordinate (x) and the radial coordinate (r), by a meridian streamline (SL(i)) at an inclination angle (alpha) at an intersection point, wherein the inclination angle (alpha) is always measured from the tangent to the meridian streamline to the tangent to the shoulder edge (AK) on the shortest angular path, and wherein the inclination angle (alpha) at at least one point of the course of the shoulder edge (AK) is provided with a magnitude of less than 30 degrees.

9. Turbomachine according to any of the preceding claims, **characterized in that** each of the blades is flowed over, in the meridian plane formed by the axial coordinate x and the radial coordinate r, by a set of meridian streamlines (SL(i))), wherein
- the direction of a meridian streamline (SL(i)) predefines the meridian coordinate (m) in a locally variable manner,
- the set-back contour portion is **characterized in that** the contour of the blade in at least one section plane, formed by the meridian-orthogonal coordinate (g) and the circumferential coordinate (u), through the blade has a shoulder in a spatially tightly delimited region,
- the meridian-orthogonal coordinate (g) is likewise locally variable and is defined as always being perpendicular to the mean meridian streamline (SNL), and,
- in a view of the set-back contour portion in the section plane formed by the meridian-orthogonal coordinate (g) and the circumferential coordinate (u), an auxiliary straight line through firstly that point of the shoulder edge which is distinguished by a locally maximum convex contour curvature and secondly that point of the contour corner which is distinguished by a locally maximum concave contour curvature is inclined with a steepness angle (epsilon) relative to the meridian-orthogonal direction (g), wherein the steepness angle (epsilon) is measured from the auxiliary straight line to the direction (g) on the shortest angular path, and wherein the steepness angle (epsilon) at at least one location of the course of the set-back contour portion amounts to more than 10 degrees.

10. Turbomachine according to any of the preceding claims, **characterized in that** the set-back contour portion extends over at least 30% of the profile depth and in so doing extends from a starting point, provided at or downstream of the leading edge plane, to an end point, which is situated downstream of the starting point and provided upstream of or in the trailing edge plane.

11. Turbomachine according to any of the preceding claims, **characterized in that** the set-back contour portion extends over at least a part of the profile depth, wherein the shoulder edge (AK) of the set-back contour portion runs, over its entire course, obliquely with respect to the meridian streamlines (SL(i)) and/or coincides, along at least a part of its course, with a meridian streamline (SL(i)).

12. Turbomachine according to any of the preceding claims, **characterized in that** the set-back contour portion extends over at least a part of the profile depth, wherein the shoulder edge (AK) of the set-back contour portion is, at each of its points, intersected by a meridian streamline (SL(i)) at an inclination angle of in each case less than 30°, and/or coincides, along at least a part of its course, with a meridian streamline (SL(i)).

13. Turbomachine according to any of the preceding claims, **characterized in that** the set-back contour portion is provided at the inner end of a rotor blade, at the outer end of a rotor blade equipped with an outer shroud, at the inner end of a stator blade equipped with an inner shroud, or at the outer end of a stator blade.

## Revendications

1. Turbomachine comprenant un chemin d'écoulement principal qui est délimité par un bordure de chemin d'écoulement principal radialement intérieure (N) et un bordure de chemin d'écoulement principal radialement extérieure (G) et qui présente une direction d'écoulement princiaube, des aubes d'une rangée de rotor ou de stator étant disposées dans le chemin d'écoulement principal,
- chacune des aubes étant réalisée avec un côté aspiration essentiellement convexe (SS) et un côté pression essentiellement concave (DS), ainsi qu'avec un bord avant (VK) sur laquelle afflue l'écoulement et un bord arrière (HK) depuis laquelle s'évacue l'écoulement,
- une ligne d'écoulement méridienne (SLM) d'un écoulement méridien étant formée au centre entre le bordure de chemin d'écoulement principal radialement intérieure (N) et le bordure de chemin d'écoulement principal radialement extérieure (G) du chemin d'écoulement principal, son allure correspondant à une ligne reliant les centres des cercles inscrits par le chemin d'écoulement principal, et à l'intérieur du chemin d'écoulement principal, un faisceau de droites (G(i)) étant fourni, dont les membres sont à chaque fois perpendiculaires à la ligne d'écoulement méridienne centrale (SLM) et se terminent au niveau des bordures de chemin d'écoulement principal (N, G), d'autres lignes d'écoulement méridiennes (SL(i)) étant définies par une ligne reliant des points avec la même subdivision identique en pourcentages des droites (G(i)) entre les bordures de chemin d'écoulement principal (N, G), et
- chacune des aubes présentant au moins un retrait de contour qui est prévu sur au moins l'un des côtés de l'aube comprenant le côté aspiration (SS) et le côté pression (DS), le retrait de contour s'étendant sur au moins une partie de la profondeur de profilé de chacune des aubes dans la direction des lignes d'écoulement méridiennes (SL(i)) et de la hauteur de profilé de l'aube perpendiculairement aux lignes d'écoulement méridienne (SL(i)),
le retrait de contour de chacune des aubes étant prévu dans une région de bord qui est définie par les 30 % radialement intérieurs ou radialement extérieurs de la largeur du chemin d'écoulement principal à proximité d'une extrémité d'aube fixe et formant une rampe qui, s'étendant dans la direction d'écoulement principal, conduit d'un point du contour d'aube à l'intérieur du chemin d'écoulement principal jusqu'à le bordure de chemin d'écoulement principal intérieure ou extérieure,
**caractérisée en ce que**
le retrait de contour comprend un bord de décrochement (AK), un coin de contour (KE) et une surface de flanc (FF) prévue entre le bord de décrochement (AK) et le coin de contour (KE), la largeur de la surface de flanc (FF) augmentant en continu le long de la profondeur de profilé d'aube dans la direction d'écoulement et se terminant par conséquent avec une valeur maximale.

2. Turbomachine selon la revendication 1, **caractérisée en ce que** l'allure de le bord de décrochement (AK) est donnée par les points de contour de chacune des aubes qui présentent la plus grande courbure convexe du contour d'aube à proximité du retrait de contour et l'allure du coin de contour (KE) est donnée par les points de contour de chacune des aubes qui présentent la plus grande courbure concave du contour d'aube à proximité du retrait de contour.

3. Turbomachine selon la revendication 1 ou 2, **caractérisée en ce que** le bord de décrochement (AK) du retrait de contour commence dans ou derrière le plan d'bord avant de chacune des aubes, le plan d'bord avant étant défini par la rotation de la ligne d'bord avant (VK) prévue dans le plan méridien (x-r) dans la direction périphérique (u) autour de l'axe médian de la turbomachine.

4. Turbomachine selon l'une quelconque des revendications précédentes, **caractérisée en ce que** le bord de décrochement (AK) du retrait de contour se termine dans ou devant le plan d'bord arrière de chacune des aubes, le plan d'bord arrière étant défini par la rotation de la ligne d'bord arrière (HK) prévue dans le plan méridien (x-r) dans la direction périphérique (u) autour de l'axe médian de la turbomachine.

5. Turbomachine selon l'une quelconque des revendications précédentes, **caractérisée en ce que** chacune des aubes est disposée dans le chemin d'écoulement principal.

6. Turbomachine selon l'une quelconque des revendications précédentes, **caractérisée en ce que** le bord de décrochement (AK) du retrait de contour se termine directement au niveau de le bordure de chemin d'écoulement principal (N, G) respectivement au niveau d'une section de profil de bord de chacune des aubes ou la surface de flanc (FF) du retrait de contour se termine avec une largeur finale directement au niveau de le bordure de chemin d'écoulement principal (N, G), respectivement au niveau d'une section de profil de bord de l'aube.

7. Turbomachine selon l'une quelconque des revendications précédentes, **caractérisée en ce que** le retrait de contour avec le bord de décrochement (AK), la surface de flanc (FF) et le coin de contour (KE) est prévu essentiellement le long de toute la profondeur de profilé de chacune des aubes.

8. Turbomachine selon l'une quelconque des revendications précédentes, **caractérisée en ce que** le bord de décrochement (AK) du retrait de contour est coupée dans le plan méridien formé par les coordonnées axiales (x) et les coordonnées radiales (r) par une ligne d'écoulement méridienne (SL(i)) suivant un angle d'inclinaison (alpha) au niveau d'un point d'intersection, l'angle d'inclinaison (alpha) étant toujours mesuré depuis la tangente à la ligne d'écoulement méridienne en prenant le chemin angulaire le plus court jusqu'à la tangente à le bord de décrochement (AK), et l'angle d'inclinaison (alpha), dans au moins un point de l'allure de le bord de décrochement (AK), étant prévu avec une valeur inférieure à 30°.

9. Turbomachine selon l'une quelconque des revendications précédentes, **caractérisée en ce que** chacune des aubes, dans le plan méridien formé par les coordonnées axiales x et les coordonnées radiales r, est couverte par un faisceau de lignes d'écoulement méridiennes (SL(i)),
- la direction d'une ligne d'écoulement méridienne (SL(i)) d'un endroit à l'autre prédéfinissant de manière variable les coordonnées méridiennes (m),
- le retrait de contour étant **caractérisé en ce que** le contour de la aube dans au moins un plan de coupe à travers la aube, formé par les coordonnées méridiennes-orthogonales (g) et les coordonnées périphériques (u), présente un décrochement dans une région étroitement limitée localement,
- les coordonnées méridiennes-orthogonales (g) variant également d'un endroit à l'autre et étant définies comme étant toujours perpendiculaires à la ligne d'écoulement méridienne centrale (SML), et
- en considérant le retrait de contour dans le plan de coupe formé par les coordonnées méridiennes-orthogonales (g) et les coordonnées périphériques (u), une droite auxiliaire passant d'une part par le point de le bord de décrochement qui se **caractérise par** une courbure de contour convexe localement maximale et d'autre part par le point du coin de contour qui se **caractérise par** la courbure de contour concave localement maximale, étant inclinée suivant un angle de raideur (epsilon) par rapport à la direction méridienne-orthogonale (g), l'angle de raideur (epsilon) étant mesuré à partir de la droite auxiliaire en passant par le chemin angulaire le plus court jusqu'à la direction (g), et l'angle de raideur (epsilon) valant plus de 10 degrés au niveau d'au moins un emplacement de l'allure du retrait de contour.

10. Turbomachine selon l'une quelconque des revendications précédentes, **caractérisée en ce que** le retrait de contour s'étend sur au moins 30 % de la profondeur de profilé et s'étend en l'occurrence depuis un point de départ prévu au niveau du plan de le bord avant ou en aval de celui-ci jusqu'à un point d'extrémité placé en aval du point de départ et prévu en amont du plan d'bord arrière ou dans celui-ci.

11. Turbomachine selon l'une quelconque des revendications précédentes, **caractérisée en ce que** le retrait de contour s'étend sur au moins une partie de la profondeur de profilé, le bord de décrochement (AK) du retrait de contour s'étendant sur toute son allure obliquement par rapport aux lignes d'écoulement méridiennes (SL(i)) et/ou coïncide avec une ligne d'écoulement méridienne (SL(i)) le long d'au moins une partie de son étendue.

12. Turbomachine selon l'une quelconque des revendications précédentes, **caractérisée en ce que** le retrait de contour s'étend sur au moins une partie de la profondeur de profilé, le bord de décrochement (AK) du retrait de contour, dans chacun de ses points, étant intersectée par une ligne d'écoulement méridienne (SL(i)) suivant un angle d'inclinaison à chaque fois inférieur à 30° et/ou coïncidant avec une ligne d'écoulement méridienne (SL(i)) sur au moins une partie de son étendue.

13. Turbomachine selon l'une quelconque des revendications précédentes, **caractérisée en ce que** le retrait de contour est prévu au niveau de l'extrémité intérieure d'une aube de rotor, au niveau de l'extrémité extérieure d'une aube de rotor pourvue d'une bande extérieure, au niveau de l'extrémité intérieure d'une aube de stator pourvue d'une bande intérieure ou au niveau de l'extrémité extérieure d'une aube de stator.
